# EUROPEAN PATENT SPECIFICATION

(11) **EP 0 761 405 B1**
(45) Date of publication and mention of the grant of the patent: **12.06.2002**
(21) Application number: 96650039.9
(22) Date of filing: 06.09.1996
(51) Int. Cl.: B29C 44/46, B29C 44/34

(54) **Size-adjustable trough for slabstock foam production**
Einstellbarer Trog zur kontinuierlichen Herstellung von Schaumstoffplatten
Auge à largeur réglable pour la production continue de mousse en plaques

(30) Priority: 06.09.1995 IE 950688
(43) Date of publication of application: 12.03.1997
(73) Proprietor: LANCASTRIA LIMITED, Dublin 2 (IE)
(72) Inventor: Hackett, Patrick, Dublin 11 (IE)
(74) Representative: Schütte, Gearoid

(56) References cited:
- GB-A- 1 397 331
- GB-A- 1 558 122
- GB-A- 1 564 604
- IE-B- 66 229
- US-A- 4 032 275
- CELLULAR POLYMERS, vol. 3, no. 3, 1984, GREAT YARMOUTH, GB, pages 195-204, XP002020100 GRIFFITHS ET AL: "Vertifoam - Continuous Vertical Block Foam Process"

## Description

The invention relates to a method and apparatus for manufacturing slabstock polymeric foam. Such slabstock polymeric foam is widely used in the manufacture of furniture and the like.

Apparatus and method for slabstock foam production in accordance with the preamble of the appended independent claims are known such as that disclosed in GB 1397331.

One of the problems with the known methods for manufacturing slabstock polymeric foam comprising delivering the reacting foam mixture from the trough over an overflow outlet from the trough onto a downwardly inclined surface leading to a conveyor are variations in the reacting foam mixture which are magnified as the foam mixture expands resulting in considerable variations in the foam blocks thus formed. This is a particular problem at the start of a production run and results in considerable losses due to out-of-specification or waste foam and reduced production efficiency. Similar problems also often arise during a production run. There are also considerable problems in setting up the production process when changing from one formulation to another as considerable time is required to change the trough and reset the ancillary equipment.

This invention is therefore directed towards providing an improved method and apparatus for producing slabstock polymeric foam which will overcome at least some of these problems.

According to the invention there is provided a method according to claim 1 and an apparatus according to claim 2.

The apparatus may include means as defined in dependent claim 3.

In addition, the invention also provides slabstock polymeric foam manufacturing apparatus comprising a premixer unit for preparing a premixture of air and a carrier system for delivery into a foam reactant mixer.

In this case, preferably the premixer unit comprises :
a premixer head;
means for injecting air into a carrier system; and
means for delivering the carrier system/air mixture into the premixer head;

Preferably, the apparatus includes :
means for delivering a surfactant into the premixer head to form a premixture of air, carrier system and a surfactant.

The invention further provides slabstock polymeric foam whenever manufactured using an apparatus of the invention.

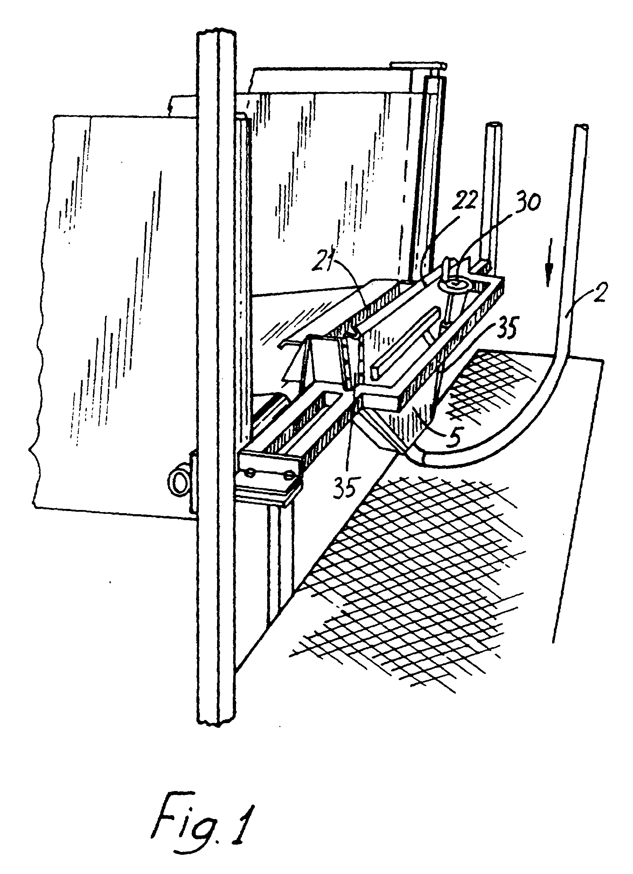

The invention will be more clearly understood from the following description thereof given by way of example only with reference to the accompanying drawings in which:-
Fig. 1 is a perspective view of part of an apparatus for manufacturing slabstock polymeric foam according to the invention;
Fig. 2 is a side, partially cross-sectional view of the apparatus of Fig. 1;
Fig. 3 is a plan view of the apparatus of Fig. 1;
Fig. 4 is an elevational view of another art of an apparatus for manufacturing slabstock polymeric foam according to the invention; and
Fig. 5 is a perspective view of a detail of the apparatus of Fig. 4.

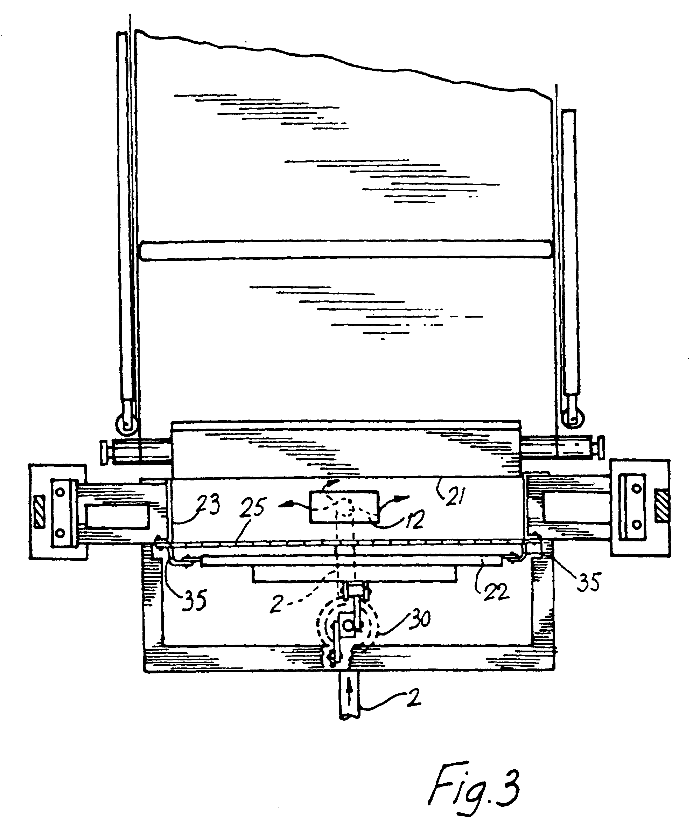

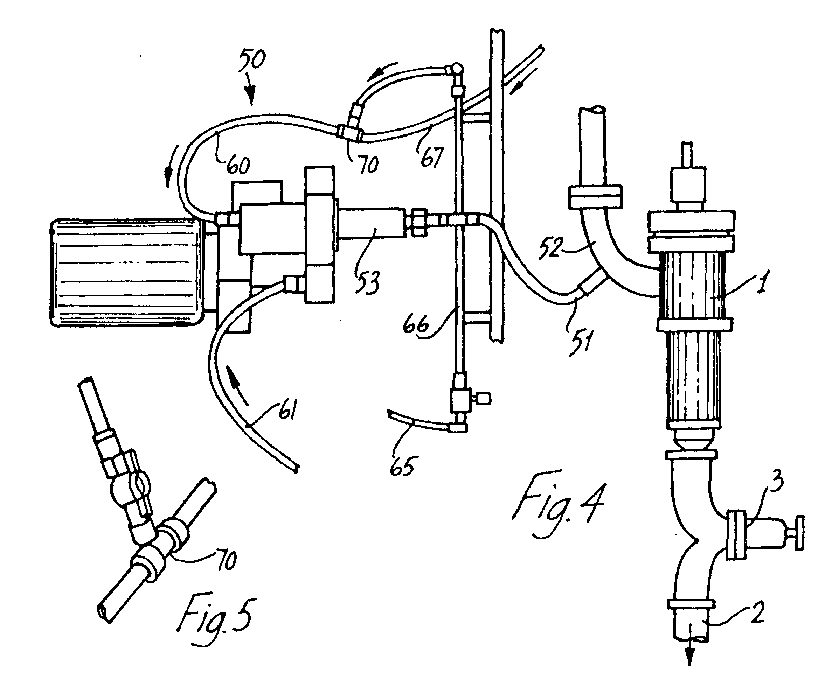

Referring to the drawings, there is illustrated a method and apparatus for manufacturing slabstock polymeric foam according to the invention. In the method of the invention, foam reactants are mixed in a mixer head 1 (see Fig. 4) and the mixed foam reactants are delivered along an inlet line 2 provided with a control valve 3 into a trough 5. The liquid foam reactants are introduced into the trough 5 through an inlet pipe 10 at a base of the trough 5. The inlet pipe 10 has a pair of diametrically opposed reactant outlets 11 in the sidewall thereof and the top of the pipe 10 is covered by a baffle plate 12 which extends over and above the foam reactant outlets 11 as best illustrated in Fig. 3. The positioning of the outlets 11 and the baffle 12 assist in distributing the liquid foam reactants in the trough 5.

The trough 5 is in this case of generally V-shape and comprises a base 20 through which the inlet pipe 10 extends, an upright front wall 21, an upright rear wall 22 and sidewalls 23,24 extending between the front and rear walls 21,22. In the trough 5, the liquid foam reactants react together and ideally produce a foam reacting liquid with a creamy texture which spills over an overflow outlet provided by the top edge of the front wall 21 onto a downwardly inclined surface in this case provided by a fall plate 25 leading to a channel-shape conveyor (not shown). As the liquid reactants fall down the fall plate 26, the foaming reaction continues and the volume of the reaction mixture expands substantially. The expanding reaction mixture is then conveyed along the channel-shaped conveyor where the foam reaction is completed and the foam is cured. The cured expanded foam is then cut into slabstock polymeric foam blocks of required size and shape.

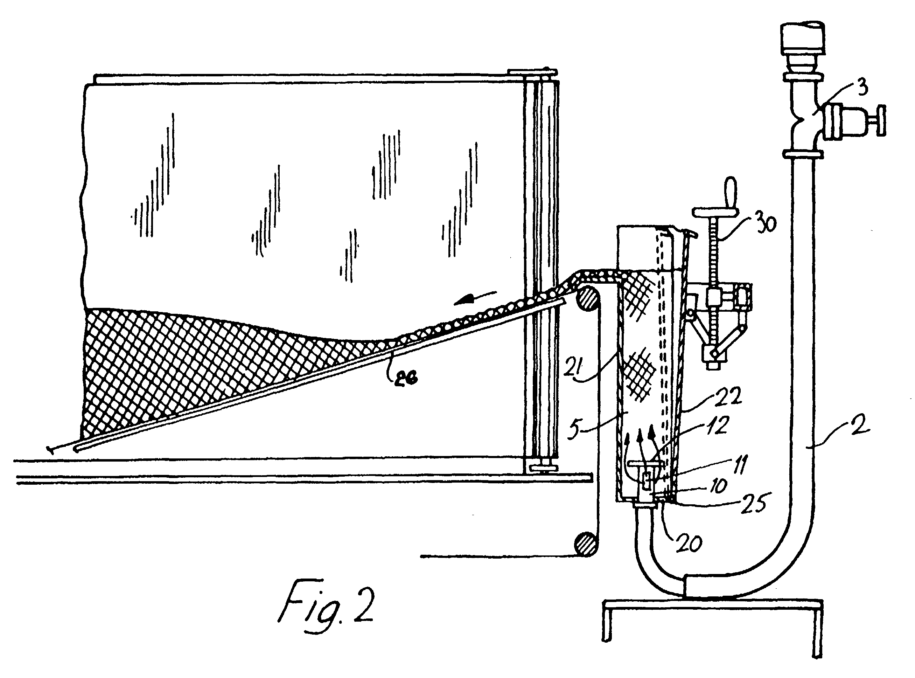

The volume of the trough 5 is adjustable to adjust the residence time in the trough to the foam reactants and to ensure that the reacting foam mixture which spills over the overflow outlet defined by the top edge of the front wall 21 has a desired creamy consistency. In this case, the rear wall 22 of the trough 5 is movable to adjust the volume of the trough. The rear wall 22 is hingedly mounted by an elongate hinge 25 which extends for the width of the trough 5 for movement by an appropriate mechanism such as the handle mechanism 30 illustrated between a range of positions to vary the volume of the trough 5 as illustrated in Fig. 2. The side edges of the movable front wall 22 are connected to the adjacent fixed sidewalls 23,24 by a sealing means which in this case is provided by elastomeric silicone sealing strips 35. The strips 35 effectively seal the movable joint between the front wall 22 and adjacent sidewalls 23,24. In addition, the hinge 25 is effectively sealed by the foam mixture which forms a light foam in the gaps between the elements of the hinge 25 while still allowing the hinge to operate and effective sealing to be maintained.

The volume of the trough 5 is initially set to approximately match it to the particular foam reactants in accordance with operational experience. When foaming is commenced, the volume of the trough 5 may be readily varied by operating the handle 30 so that the residence time in the trough is matched to the foam reactants and to achieve a desired creamy consistency of the reactants overflowing from the trough are being varied by adjusting the volume of the trough. In this way, optimum manufacturing efficiency and high quality foam is produced. Because the volume of the trough is easily adjusted, it is not necessary to change the trough between reaction runs and the volume can be adjusted in line while the foam reaction is continuing.

Referring now particularly to Figs. 4 and 5 in the method of the invention the foam reactants are preferably mixed by first preparing a premixture of air, water and a surfactant, in this case a silicon surfactant, in a premixer unit generally indicated by the reference numeral 50. The premix is then delivered along a premix line 51 and injected into other foam reaction ingredients entering the mixing head 1 through an inlet pipe 52. The premixer unit 50 includes a premixing head 53 to which a mixture of air and water are delivered along a line 60 and a silicon surfactant is delivered along a line 61. Compressed air is delivered along a line 65 through a flowmeter 66 into a water line 67. The air is delivered into the water through a sintered plug 70 which promotes bubble formation.

By providing a premixture of water, air and a surfactant, we have found that the optimum bubble distribution and cell formation is achieved in the polymeric foam block formed by the method of the invention. The bubbles of air are effectively formed in the premixer unit which delivers a premixture containing bubbles of a consistent size into the foam reactants, allowing a foam slabstock with even cell distribution to be formed.

It will be appreciated that while in the preferred method described, air is incorporated into a water stream and mixed with a surfactant to form a premixture, it may be possible to use carrier systems based on other foam reaction ingredients.

Many variations of the specific embodiments of the invention as defined in the appended claims will be readily apparent and accordingly the invention is not limited to the embodiments hereinbefore described which may be varied in both construction and detail.

## Claims

1. A method for manufacturing slabstock polymeric foam comprising the steps of:
mixing foam reactants;
introducing the mixed liquid reactants into a V-shaped trough (5) through a trough inlet (10) provided by an inlet pipe (10), wherein the trough (5) comprises a base (20), an upright rear wall (22), an upright front wall (21) and side walls (23, 24) extending between the front and rear walls (21 & 22), one of the walls (22) being movable relative to the adjacent walls (21, 23, 24), the volume of the trough (5) being adjusted by moving the movable wall (22) preferably the movable wall is the rear wall (22) and the volume of the trough (5) is adjusted by moving the rear wall (22) ;
delivering the reacting foam mixture over an overflow outlet from the trough onto a downwardly inclined surface (26) leading to a conveyor; and
allowing the foam mixture to expand on the conveyor into slabstock polymeric foam blocks;
**characterised in that** the foam reactants are mixed by first preparing a premixture of pressurised air, water, a surfactant and a carrier system, wherein the premixture is prepared by mixing water and pressurised air and mixing the air/water with a surfactant in a premixer unit (50), the water and pressurised air being preferably mixed by injecting air into a water stream, the surfactant being preferably a silicone surfactant,
and introducing the premixture into other foam reactant ingredients to form the foam reactant mixture;
and further **characterised in that** the liquid foam reactants are delivered into the trough (5) through two substantially diametrically opposed outlet slots (11) in the sidewall of the inlet pipe (10), and distributed in the trough by a baffle (12) extending from the inlet pipe (10) above and over the liquid foam reactants outlets (11),
so that the reacting foam mixture formed spills from the trough from the overflow outlet with a creamy consistency.

2. Slabstock polymeric foam manufacturing apparatus comprising:
a V-shaped trough (5) with a trough inlet (10) for liquid reactants provided by an inlet pipe (10) wherein the trough (5) comprises a base (20), an upright rear wall (22), an upright front wall (21) and side walls (23, 24) extending between the front and rear walls (21, 22), one of the walls (22) being movable relative to the adjacent walls (21, 23, 24), the volume of the trough (5) being adjusted by moving the movable wall (22), the movable wall being preferably the rear wall (22) and the volume of the trough (5) being preferably adjusted by moving said rear wall (22),
and a from reactant mixer(1) in which liquid foam reactants are reacted,
**characterised by** a premixer unit (50) for preparing a mixture of air, water and a surfactant, for delivery into the foam reactant mixer (1), said premixer unit (50) preferably comprising:
a premixer head (53);
means for injecting air into a carrier system; and
means for delivering the carrier/air mixture into the premixer head (53);
and further **characterized by** two substantially diametrically opposed outlet slots (11) in the sidewall of the inlet pipe (10) through which the liquid foam reactants are delivered into the trough (5), and by a baffle (12) extending from the inlet pipe (10) above and over the liquid foam reactant outlets (11) to distribute the reactants in the trough (5).

3. Apparatus as claimed in claim 2 including means for delivering a surfactant into the premixer head (53) to form a premixture of air, carrier system and surfactant.

## Patentansprüche

1. Verfahren zum Herstellen eines tafelförmigen Polymerschaumsstoffs, das die folgenden Schritte umfasst:
Mischen von Schaumstoffreaktionspartnern;
Einführen der gemischten flüssigen Reaktionspartner in einen V-förmigen Trog (5) über einen durch ein Einlassrohr (10) bereitgestellten Trogeinlass (10), wobei der Trog (5) einen Boden (20), eine aufrechtstehende hintere Wand (22), eine aufrechtstehende vordere Wand (21) und Seitenwände (23, 24) aufweist, die sich zwischen der vorderen und hinteren Wand (21 & 22) erstrecken, wobei eine der Wände (22) in Bezug zu den angrenzenden Wänden (21, 23, 24) bewegbar ist, das Volumen des Trogs (5) durch Bewegen der bewegbaren Wand (22) eingestellt wird, die bewegbare Wand vorzugsweise die hintere Wand (22) ist, und das Volumen des Trogs (5) durch Bewegen der hinteren Wand (22) eingestellt wird;
Zuführen der reagierenden Schaummischung über einen Überlaufauslass aus dem Trog auf eine nach unten geneigte Oberfläche (26), die zu einer Fördereinrichtung führt; und
Ausdehnen lassen der Schaummischung auf der Fördereinrichtung zu tafelförmigen Polymerschaumblöcken;
**dadurch gekennzeichnet, dass** die Schaumreaktionspartner gemischt werden, indem zuerst eine Vormischung aus Druckluft, Wasser, einem oberflächenaktiven Stoff und einem Trägersystem zubereitet wird, wobei die Vormischung durch Mischen von Wasser und Druckluft und Mischen von Luft/Wasser mit einem oberflächenaktiven Stoff in einer Vormischereinheit (50) zubereitet wird, wobei das Wasser und die Druckluft vorzugsweise durch Injizieren von Luft in einen Wasserstrom gemischt werden, und der oberflächenaktive Stoff vorzugsweise ein oberflächenaktiver Silikonstoff ist,
und Einführen der Vormischung in andere Bestandteile der Schaumreaktionspartner zum Bilden der Schaumreaktionspartnermischung;
und ferner **dadurch gekennzeichnet, dass** die flüssigen Schaumreaktionspartner durch zwei im wesentlichen diametral entgegengesetzte Auslassschlitze (11) in der Seitenwand des Einlassrohrs (10) in den Trog (5) eingebracht werden, und in dem Trog durch eine Prallfläche (12) verteilt werden, die sich von dem Einlassrohr (10) oberhalb und über den Auslässen (11) für flüssige Schaumstoffreaktionspartner erstreckt, so dass die gebildete reagierende Schaummischung aus dem Trog von dem Überlaufauslass mit einer cremigen Konsistenz abfließt.

2. Vorrichtung zum Herstellen von tafelförmigem Polymerschaumstoff, umfassend:
einen V-förmigen Trog (5) mit einem durch ein Einlassrohr (10) bereitgestellten Trogeinlass (10) für flüssige Reaktionspartner, wobei der Trog (5) einen Boden (20), eine aufrechtstehende hintere Wand (22), eine aufrechtstehende vordere Wand (21) und Seitenwände (23, 24) aufweist, die sich zwischen der vorderen und hinteren Wand (21, 22) erstrecken, wobei eine der Wände (22) in Bezug zu den angrenzenden Wänden (21, 23, 24) bewegbar ist, das Volumen des Trogs (5) durch Bewegen der bewegbaren Wand (22) eingestellt wird, die bewegbare Wand vorzugsweise die hintere Wand (22) darstellt und das Volumen des Trogs (5) vorzugsweise durch Bewegen der genannten hinteren Wand (22) eingestellt wird,
und einen Schaumreaktionspartnermischer (1), in dem flüssige Schaumreaktionspartner zur Reaktion gebracht werden,
**gekennzeichnet durch** eine Vormischereinheit (50) zum Zubereiten einer Mischung aus Luft, Wasser und einem oberflächenaktiven Stoff zum Einbringen in den Schaumreaktionspartnermischer (1), wobei die genannte Vormischereinheit (50) vorzugsweise umfasst:
einen Vormischerkopf (53);
Mittel zum Injizieren von Luft in ein Trägersystem; und
Mittel zum Einbringen der Träger/Luftmischung in den Vormischerkopf (53);
und weiter **gekennzeichnet durch** zwei im wesentlichen diametral entgegengesetzte Auslassschlitze (11) in der Seitenwand des Einlassrohrs (10), **durch** die die flüssigen Schaumreaktionspartner in den Trog (5) eingebracht werden, und **durch** eine Prallfläche (12), die sich vom Einlassrohr (10) oberhalb und über den Auslässen (11) für flüssige Schaumreaktionspartner erstreckt, um die Reaktionspartner im Trog (5) zu verteilen.

3. Vorrichtung nach Anspruch 2, die Mittel zum Einbringen eines oberflächenaktiven Stoffs in den Vormischerkopf (53) umfasst, um eine Vormischung von Luft, Trägersystem und oberflächenaktivem Stoff zu bilden.

## Revendications

1. Procédé pour fabriquer des blocs de mousse polymère plats comprenant les étapes de :
mélange de réactants de mousse ;
introduction des réactants liquides mixtes dans une auge en forme de V (5) par une entrée d'auge (10) fournis par un tuyau d'admission (10), dans lequel l'auge (5) comprend une base (20), une paroi arrière droite (22), une paroi avant droite (21) et des parois latérales (23, 24) s'étendant entre les parois avant et arrière (21 et 22), une des parois (22) étant mobile par rapport aux parois adjacentes (21, 23, 24), le volume de l'auge (5) étant réglé en déplaçant la paroi mobile (22) de préférence la paroi mobile est la paroi arrière (22) et le volume de l'auge (5) est réglé en déplaçant la paroi arrière (22);
fourniture du mélange de mousse réagissant sur une sortie de débordement de l'auge sur une surface inclinée vers le bas (26) conduisant à une bande transporteuse ; et
pause du mélange de mousse pour le laisser se dilater sur la bande transporteuse en blocs de mousse polymère plats ;
**caractérisé en ce que** les réactifs de mousse sont mélangés en préparant d'abord un prémélange d'air pressurisé, d'eau, d'un surfactant et d'un système porteur, dans lequel le prémélange est préparé en mélangeant de l'eau et de l'air pressurisé et en mélangeant l'air/l'eau avec un surfactant dans une unité de prémélange (50), l'eau et l'air pressurisé étant de préférence mélangés en injectant de l'air dans un courant d'eau, le surfactant étant de préférence un surfactant de silicone,
et introduction du prémélange dans d'autres ingrédients de réactants de mousse en vue de former le mélange de réactants de mousse ;
et **caractérisé en outre en ce que** les réactants de mousse liquides sont fournis dans l'auge (5) par deux fentes de sortie sensiblement diamétralement opposées (11) dans la paroi latérale du tuyau d'admission (10), et distribués dans l'auge par une chicane (12) s'étendant depuis le tuyau d'admission (10) par-dessus les et au-delà des sorties de réactants de mousse liquides (11) de telle sorte que le mélange de mousse réactif formé se déverse de l'auge depuis la sortie de débordement avec une consistance crémeuse.

2. Dispositif de fabrication de blocs de mousse polymère plats comprenant :
une auge en forme de V (5) ayant une entrée d'auge (10) pour des réactants liquides fournis par un tuyau d'admission (10), dans lequel l'auge (5) comprend une base (20), une paroi arrière droite (22), une paroi avant droite (21) et des parois latérales (23, 24) s'étendant entre les parois avant et arrière (21, 22), une des parois (22) étant mobile par rapport aux parois adjacentes (21, 23, 24), le volume de l'auge (5) étant réglé en déplaçant la paroi mobile (22), la paroi mobile étant de préférence la paroi arrière (22) et le volume de l'auge (5) étant de préférence réglé en déplaçant ladite paroi arrière (22),
et un mélangeur de réactants de mousse (1) dans lequel les réactants de mousse liquides sont mis en réaction,
**caractérisé par** une unité de prémélange (50) pour préparer un mélange d'air, d'eau et d'un surfactant, destiné à être fourni dans le mélangeur de réactants de mousse (1), ladite unité de prémélange (50) comprenant de préférence :
une tête de prémélange (53) ;
un moyen pour injecter de l'air dans un système porteur ; et
un moyen pour fournir le mélange de porteur/d'air dans la tête de prémélange (53) ;
et **caractérisé en outre par** deux fentes de sortie sensiblement diamétralement opposées (11) dans la paroi latérale du tuyau d'admission (10) par lesquelles les réactants de mousse liquides sont fournis dans l'auge (5), et par une chicane (12) s'étendant depuis le tuyau d'admission (10) par-dessus les et au-delà des sorties de réactants de mousse liquides (11) de manière à distribuer les réactants dans l'auge (5).

3. Dispositif selon la revendication 2, comportant un moyen pour fournir un surfactant dans la tête de prémélange (53) afin de former un prémélange d'air, de système porteur et de surfactant.
